(19) Europäisches Patentamt / European Patent Office / Office européen des brevets

(11) **EP 1 892 665 A2**

(12) **EUROPEAN PATENT APPLICATION**

(43) Date of publication:
**27.02.2008 Bulletin 2008/09**

(51) Int Cl.:
***G06T 3/00*** *(2006.01)*

(21) Application number: **07114984.3**

(22) Date of filing: **24.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **25.08.2006 US 509664**

(71) Applicant: **Imay Software Co. Ltd.**
**116 Taipei City (TW)**

(72) Inventors:
• **Shih, Kuang-Yi**
 **Beitou District, Taipei City 112 (TW)**
• **Shih, Kuang Yen**
 **Wunshan District, Taipei City 116 (TW)**

(74) Representative: **Viering, Jentschura & Partner**
 **Grillparzerstrasse 14**
 **81675 München (DE)**

(54) **Entire-view video image process system and method thereof**

(57) The present invention generally relates to the field of an image system using a pantoscopic lens as an input video image source. In particular, all of the image process steps are in SOC (System on A Chip) without PC. The present invention provides the entire-view video image process method comprising the steps of: (1) start; (2) inputting and processing the information for transforming a pantoscopic image based on hemisphere coordinate to another pantoscopic image based on cylindrical coordinate, and generating a cylindrical projection image; (3) inputting and confirming the information applied to generate a plurality of perspective object images based on cylindrical coordinate, and then generating the plurality of perspective object images; (4) merging the cylindrical projection image and the plurality of perspective object images to become an output video image, and determining the output video image; and (5) end. Further, the present invention provides the entire-view video image process system comprising: an image generating unit receiving input analog image signals and outputting the image signals after conversion; a signal process unit receiving, processing the image signals from the image generating unit, and then storing the processed image signals to an image memory with a SDRAM for remapping, continuously NTSC/PAL analog video image signals after conversion being output by the signal process unit ; and a control unit controlling the signal process unit and outputting digital video image signal.

FIG.1

EP 1 892 665 A2

**Description**

BACKGROUND OF THE INVENTION

1. Field of the Invention

The present invention generally relates to the field of an image system using a pantoscopic lens as an input video image source. In particular, all of the image process steps are in SOC (System on A Chip) without PC.

2. Description of the Prior Art

Presently the monitoring system has being applied everywhere and developed into an advanced stage for recording video images. The mostly common usage is to record crimes. Therefore, the basic requirement of the monitoring system may monitor everywhere without any blind spot. However, the prior arts lack of the ability to keep under surveillance, since a plurality of blind spots are happening as always. To avoid such problem, obviously more monitoring systems should be installed on a filed so as to increase the cost. Therefore, to find a monitoring system for avoiding the conditions of happening blind spots and increasing the installation cost may be an important issue.

SUMMARY OF THE INVENTION

The primary objective of the present invention is to provide an entire-view video image process system, which serves an entire view with 360° on an output system divided into at least 3 viewing areas, but without pantoscopic lens distortion. The video image process system in which the configurations of the line memories and the circuit are associated therewith, and the video image process algorithm can be changed in accordance with the process conditions, such as PAN, TITL, ZOOM control, and pantoscopic source image alignment.

The second objective of the present invention is to provide an entire-view video image process method for transforming an output single wide-angle circular image into at least 3 object images. Total viewing areas occupied by object images are able to cover all source images' circular regions with some overlapping. Thus the entire 360° field-of-view without distortion in any single time is shown. The object images transformed to perspective images are capable of restoring at a second location. Such total restored images overlap the whole pantoscopic circular images.

Other and further features, advantages and benefits of the invention will become apparent in the following description taken in conjunction with the following drawings. It is to be understood that the foregoing general description and following detailed description are exemplary and explanatory but are not to be restrictive of the invention. The accompanying drawings are incorporated in and constitute a part of this application and, together with the description, serve to explain the principles of the invention in general terms. Like numerals refer to like parts throughout the disclosure.

BRIEF DESCRIPTION OF THE DRAWINGS

The objects, spirits and advantages of the preferred embodiments of the present invention will be readily understood by the accompanying drawings and detailed descriptions, wherein:

FIG. 1 illustrates a schematic flow view of an embodiment of the present invention;

FIG. 2 illustrates a structure of an entire-view video image process system of the present invention;

FIG. 3 illustrates a detail structure of the entire-view video image process system of FIG. 2;

FIG. 4 illustrates a schematic view of a pantoscopic image based on hemisphere coordinate of the present invention;

FIG. 5 illustrates a schematic view of different pantoscopic lens with different viewing area but only in a same height field;

FIG. 6 illustrates a schematic view of two parameters of cylindrical coordinate;

FIG. 7 illustrates a schematic view of a projected area from a source image to object images of the present invention;

FIG. 8 illustrates a flow diagram of the method of the present invention;

FIG. 9 illustrayes a schematic view of an entire viewing system with three perspective corrected object images of the present invention;

FIG. 10A illustrates a first practical view of the present invention;

FIG. 10B illustrates a second practical view of the present invention;

FIG. 11 illustrates a schematic view of the transformation of a pantoscopic image based on hemisphere coordinate to the pantoscopic image based on cylindrical coordinate of the present invention;

FIG. 12 illustrates a schematic control-flow view of a memory controller, a lens property controller, a PTZ controller and a computer system of the present;

FIG. 13 illustrates a schematic view of a 360 X 180 degree cylindrical coordinate simulating whole space of the present invention; and

FIG. 14 illustrates a schematic view of parameters used in a pantoscopic image of the present invention.

DETAILED DESCRIPTION OF THE INVENTION

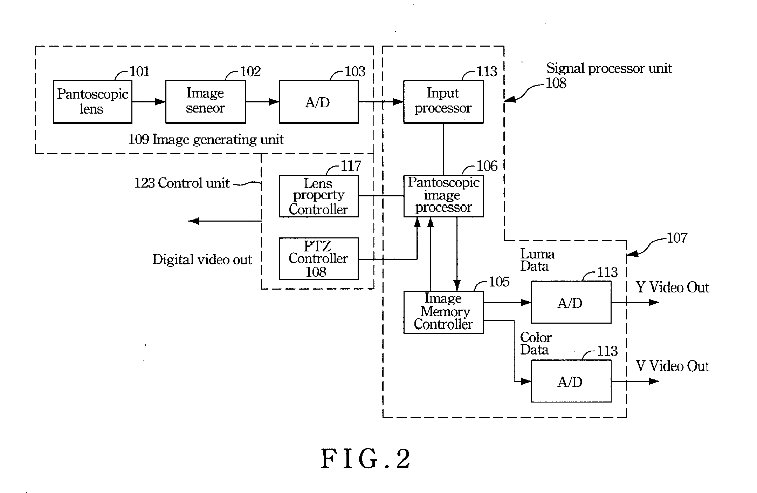

Referring now to the drawings, FIG. 2 illustrates a structure of an entire-view video image process system of the present invention. The system has an image generating unit 109, a signal process unit 108, and a control unit 123.

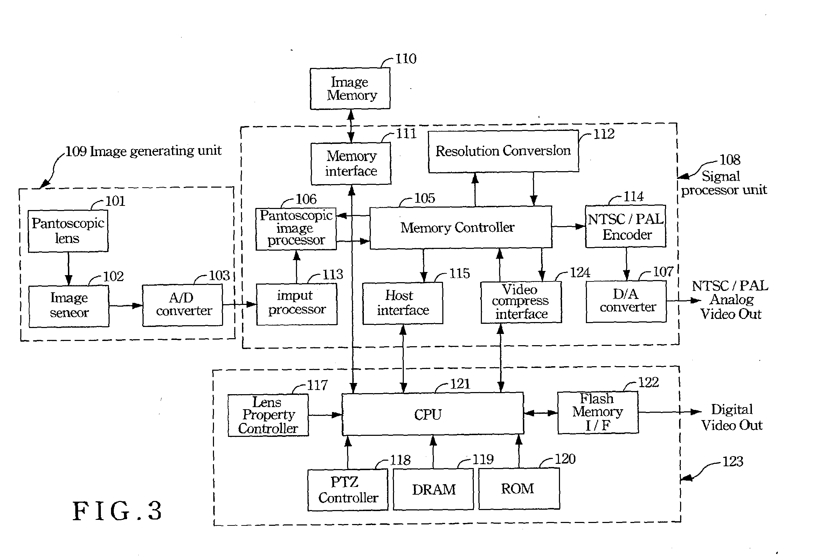

As shown in FIG. 3, which illustrates a detail structure of the entire-view video image process system of FIG. 2 and includes the image generating unit 109, the signal process unit 108 for processing image data in a pre-set fashion, the image memory 110 comprised of a SDRAM, and the control unit 123 for controlling signal process.

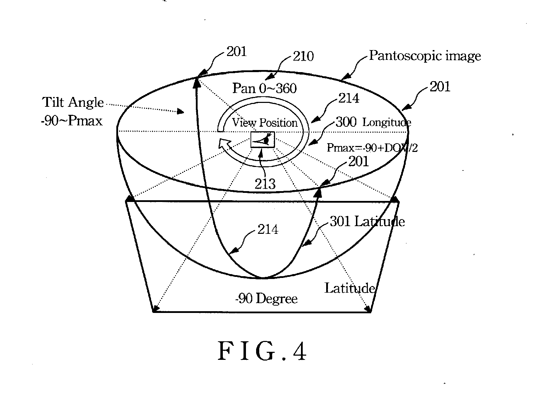

The image generate unit 109 includes a pantoscopic lens 101, an image sensor 102, and an A/D converter 103. The pantoscopic lens 101 is defined as an apparatus for projecting a lens image to the image sensor 102 at a full circular region and a diagonal angle of view (DOV) greater than 120 degrees, as shown in Fig. 4. The A/D converter 103 is to convert input analog image signals to digital image signals and output the image data of the digital image signals.

The signal process unit 108 is a sole LSI (large scale integrated circuit) and includes an input processor 113 for accepting and processing the image data from the A/D converter 103, a memory controller 105 for reading and writing the image data into an image memory 110, a NTSC (National Television Standards Committee)/PAL (phase alternation by line) encoder 114 serving to output the image data of the digital image signal, a D/A converter 107 for analogizing the image data of the digital image signal and outputting analog video image signals with the system of NTSC or PAL, a memory interface 111 as an interface for the image memory 110, a resolution conversion 112 generating specified resolution image data, and a pantoscopic image processor 106 for remapping pantoscopic images from the image generating unit 109 to entire scene; wherein the pantoscopic image processor 106 uses a pantoscopic image circular region to produce 2 X 2 quadripartite object images as output video images, a host interface 115, which is an interface for having data transmission/reception of a CPU 121, and a video compress interface 124, wherein the memory controller 105 also routes the image data via the video compress interface 124 compressing the video image, and it derives that the image data expanded by the video compress interface 124 are written to the image memory 110.

The input processor 113 processes the image data from the A/D converter 103 with digital clamp, shading correction aperture correction, gamma correction or color processing and routes the resulting signals to the memory controller 105.

Specifically, the memory controller 105 controls processed image data supplied by the pantoscopic image processor 106 and routes the image data read out from the image memory 110 to the NTSC/PAL encoder 114. The NTSC/PAL encoder 114 encodes the image data in accordance with specified NTSC or PAL system and sends the encoded data to the D/A converter 107. Then the analog video image signals are given via output terminals.

With reference to Fig. 3 again, the memory controller 105 routes the image data to the resolution conversion 112 for generating new image data with specified resolution, and then written to the image memory 110.

With reference to Fig. 2, Fig. 3, and Fig. 4, the control unit 123 includes a CPU (central process unit) 121 with a control program for controlling the respective circuits of the signal process unit 108, a DRAM (Dynamic Random Access Memory) 119, a ROM (read-only memory) 120, a flash memory interface 122 as an interface of the lens property controller 117, and a PTZ controller 118; wherein the lens property controller 117 sets the parameters including the radius, the center of the pantoscopic lens 101, the circular region, and the diagonal angle of view (DOV) 214 of the pantoscopic image processor 106, the PTZ controller 118 sets the parameters including the pan angle, the tilt angle and the angle of the FOV (Field of view) 203 of the pantoscopic image processor 106.

With reference to Fig. 3 again, the input processor 113 routes the image data from the image sensor 102 and the A/D converter via an image data bus (not shown in Fig. 3) to the image memory 110. The memory controller 105 performs data transfer between the image memory 110 and the signal process circuits connecting the image data bus. The resolution conversion 112 performs resolution conversion of the image data from the image memory 110, and routes the results back to the image memory 110. The video compress interface 124 compresses the image data from the image memory 110 in accordance with the video codec system to route the compressed image data via a CPU bus (not shown in Fig. 3) to the CPU 121.

The input processor 113 is fed with the image data once the image data are written to the pantoscopic image processor 106. The pantoscopic image processor 106 generates and merges 4 object images as an output image, and then writes the results to the image memory 110.

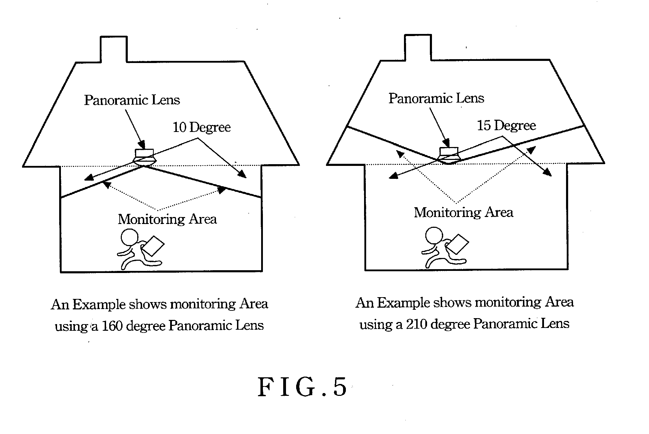

The pantoscopic lens 101 may be a fisheye lens or a wide-angle lens for producing electrical image signals corresponding to images as seen through the lens. This electrical image signal is distorted because of the curvature of the lens, but the electrical signal is able to cover an entire monitoring area such as a room, as shown in Fig. 5. The lens is mounted on a location with a suitable height, or the lens with the DOV (degree of view) 214 being large enough. For the invention, the pantoscopic lens orientation is suggested to mount from cell to floor or from floor to cell.

With reference to Fig. 4 and Fig. 5, an output image with multiple perspective corrected sub-images has the property to cover entire 360 degree of view. The summation of the angles of all sub-image's maximum FOV (Field of View) 203 is greater than 360°, and the top side and the bottom side reach the source image circular boundaries, the other side includes the source image center and each sub-image is able to control the angles of the Pan 210 from 0 to 360°.

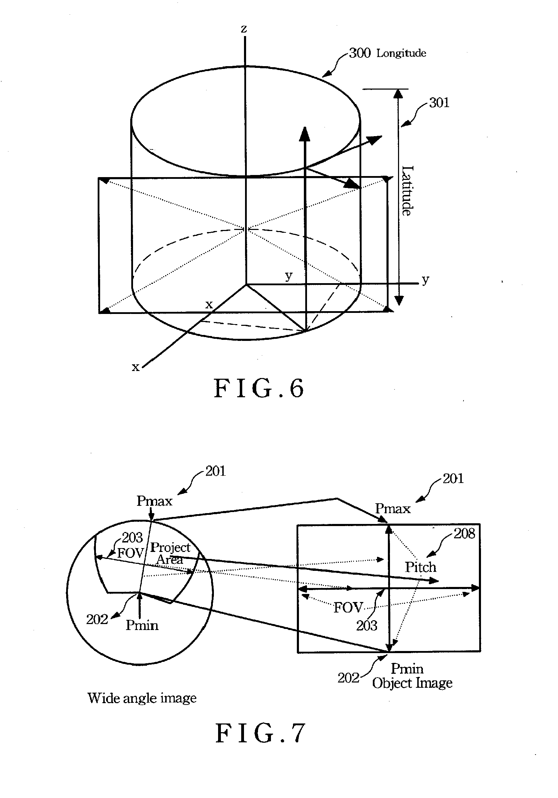

The generated 4 object images with at least 3 object images viewing area able cover all entire wide-angle circular source images without distortion. With perspective correction, the viewing position is always fixed and located at the center of cylindrical coordinate, as shown in Fig. 4 and Fig. 6. The viewing directions have two parameters, including a 360-degree longitude 300 surround the center of cylindrical coordinate and a latitude 301 constrained a pitch angle region. At last, a magnification controlled by either computer or remote control means is called the Field-of-View (FOV) 203, as shown in FIG. 7.

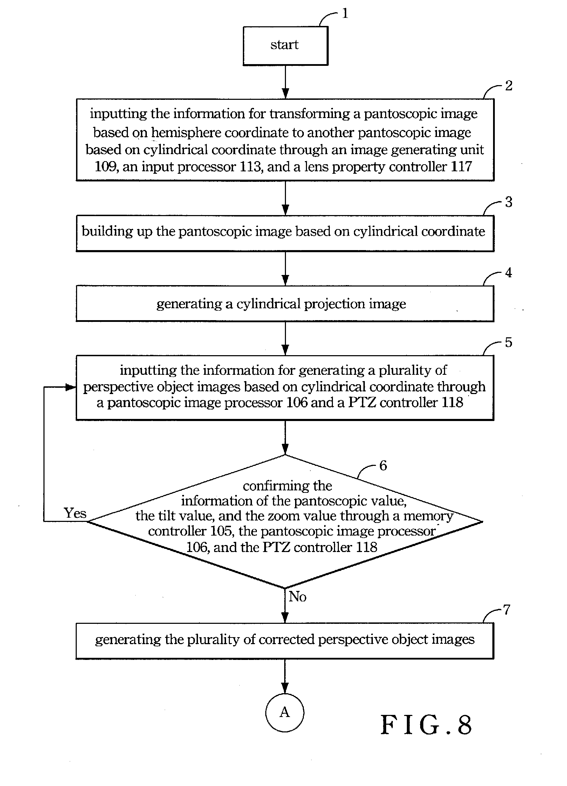

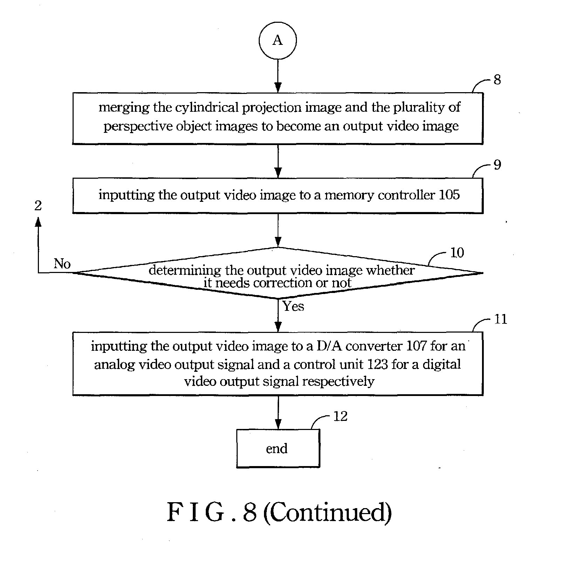

With reference to FIG. 8, the entire-view video image process method includes the steps of: (1) start; (2) inputting the information for transforming a pantoscopic image based on hemisphere coordinate to another pantoscopic image based on cylindrical coordinate through an image generating unit 109, an input processor 113, and a lens property controller 117, wherein the information has a plurality of lens properties having the source image radius, the field of view (FOV), and the circular center, the image generating unit 109 has a pantoscopic lens 101, an image sensor 102, and an A/D converter 103; (3) building up the pantoscopic image based on cylindrical coordinate; (4) generating a cylindrical projection image; (5) inputting the information for generating a plurality of perspective object images based on cylindrical coordinate through a pantoscopic image processor 106 and an information controller, wherein the information has the pantoscopic value, the tilt value, and the zoom value, the information controller is a PTZ controller 118, the plurality of perspective object images are at least three images; (6) confirming the information of the pantoscopic value, the tilt value, and the zoom value through a memory controller 105, the pantoscopic image processor 106, and the PTZ controller 118, if yes, going to the next step, if no, going back to the step (5); (7) generating the plurality of corrected perspective object images; (8) merging the cylindrical projection image and the plurality of perspective object images to become an output video image; (9) inputting the output video image to a memory controller 105; (10) determining the output video image whether it needs correction or not, if yes, going back to the step (2), if no, going to the step (11); (11) inputting the output video image to a D/A converter 107 for an analog video output signal and a control unit 123 for a digital video output signal respectively; and (12) end.

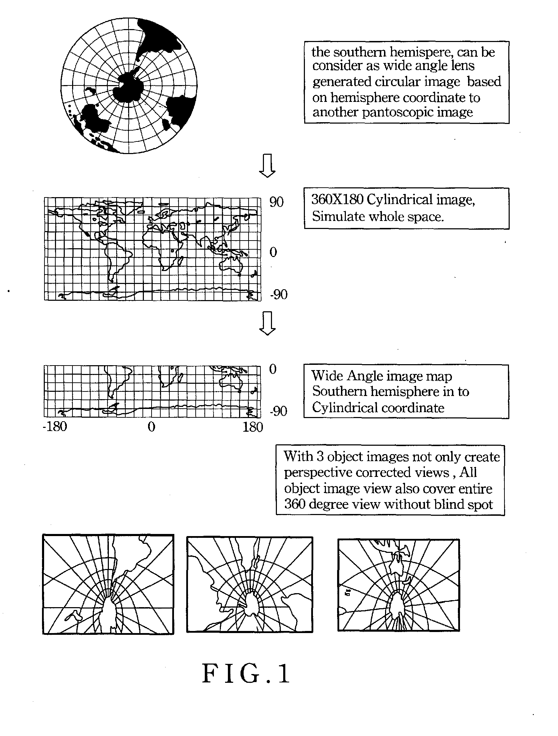

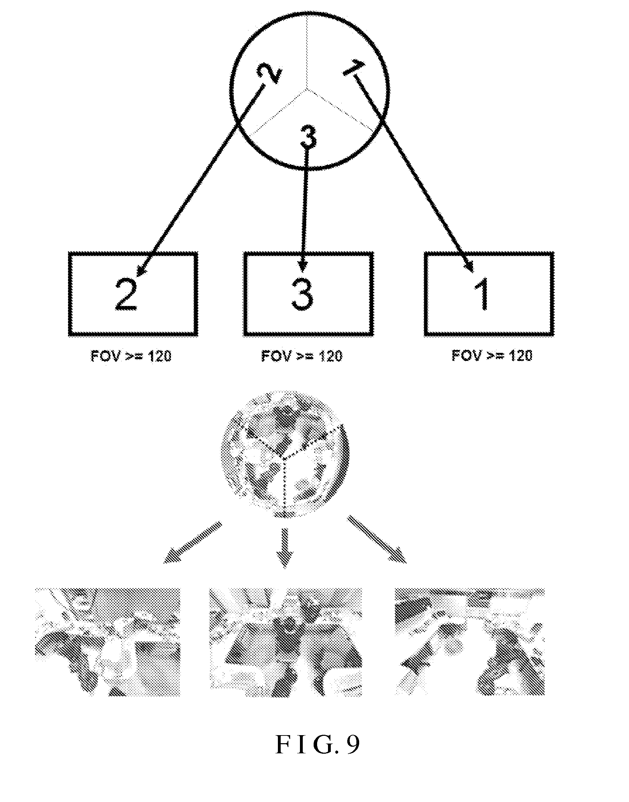

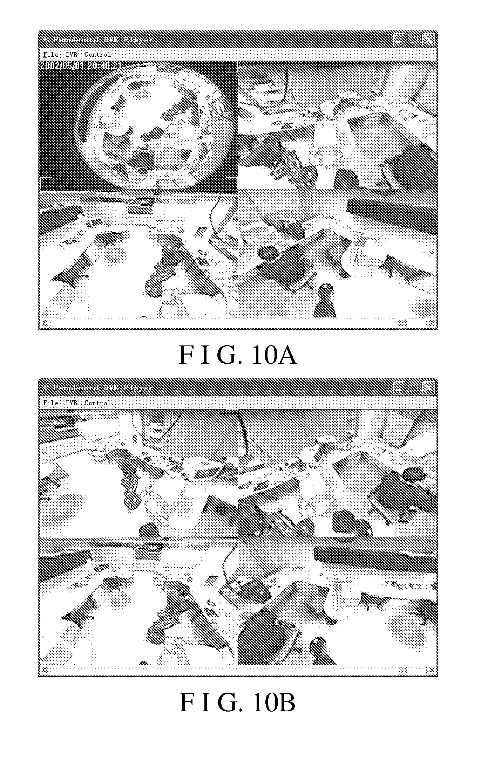

With the invention providing the perspective correct method, all object images can be adjusted for the angle of the FOV 203 greater than 120 degrees or more. The invention generates at least 3 object video images. Total object video image's viewing areas are able to cover all source image's circular region with some overlapping without distortion if each object image with a Pan angle distance in 120 degrees, as shown in FIG. 1. FIG. 1 illustrates a schematic flow view of an embodiment of the present invention. That is, the map view of the Southern Hemisphere is built up based on hemisphere coordinate, and then it is converted to the map view based on cylindrical coordinate. Thirdly the map view based on cylindrical coordinate is divided into three object images, and each covers the entire 360-degree view without any blind spot. Obviously the map view based on cylindrical coordinate is just like the figure of a pantoscopic lens, and the image grabbed by the pantoscopic lens may be as the map view based on cylindrical coordinate. Therefore, the image is converted to a monitor screen and divided by three object images, as shown in FIG. 9, which is a schematic view of an entire viewing system with three perspective corrected object images of the present invention. Further, there is one more image showing the image based on hemisphere coordinate, as shown in FIG. 10A, which is a first practical view of the present invention. With reference to FIG. 10B, which is a second practical view of the present invention. That is, the image is divided into four object images.

This system has been tested on a pantoscopic lens with the angle range of DOV from 145 to 195 degrees. The image resolution can be 320 X 240, 352 X 240, 640 X 480, NTSC/PAL, 800 X 600, 1024 X 768, 1280 X 1024, 1280 X 960, 1280 X 1024, and 1600 X 1200 pixels.

Following is the disclosure of the equations of the theory of the present invention.The following defines the variables assigned and its description:

R: Radius of pantoscopic lens generated circular image.

$\alpha$: Tilt angle, its value can be represent as $\alpha$ = Tilt * n / 180.

$\beta$: Pan angle, it's value can be represent as $\beta$ = Pan * n / 180.

$\gamma$ : a Roll angle, a rotating angle from the lens. In this invention the value is always 0.

W: width of object image.

H: height of object image.

F: FOV field-of-view in object image can be represent as F = FOV * n / 180, as shown in FIG. 7.

$\pi$: 3.141592654

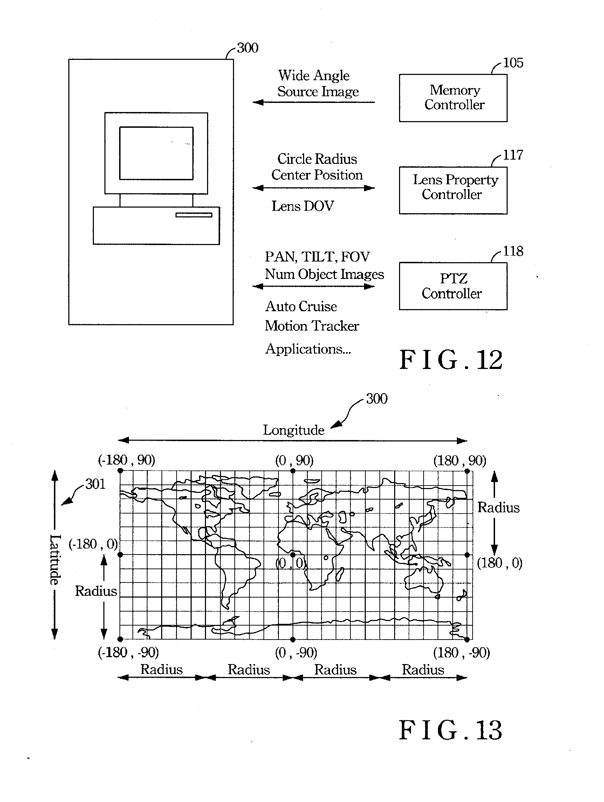

A pantoscopic image based on hemisphere coordinate converted to cylindrical coordinate can be expression as: (FIG. 12)

Where Cylindrical coordinate with dimension: (4 * R, R)

Each pixel in cylindrical coordinate can be calculated to relate the pantoscopic source image by equation (1):

```
For (i = -2R; i < 2R; i = i + 1 )
     For (j = 0; j > -R; j = j - 1)
         θ = i * π / 2R
         x = -j*cos(θ)
         y = -j * sin(θ)
     End for
End for
(1)
```

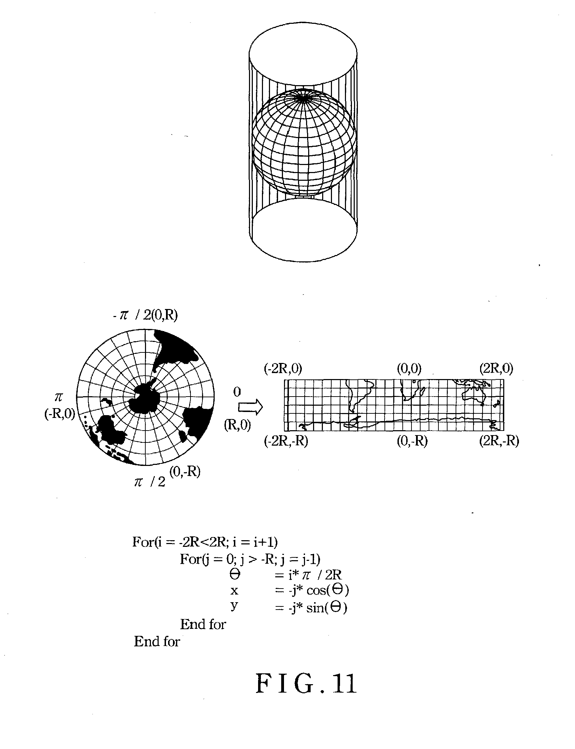

A method generating perspective corrected remapping base on cylindrical coordinate transform can be used as the following equations, as shown in FIG. 11.

Let A, B, C, M be 3 X 3 matrices, where

$$A = \begin{bmatrix} 1 & 0 & 0 \\ 0 & \cos(\alpha) & \sin(\alpha) \\ 0 & -\sin(\alpha) & \cos(\alpha) \end{bmatrix}$$

$$B = \begin{bmatrix} \cos(\beta) & 0 & -\sin(\beta) \\ 0 & 1 & 0 \\ \sin(\beta) & 0 & \cos(\beta) \end{bmatrix}$$

$$C = \begin{bmatrix} \cos(\gamma) & \sin(\gamma) & 0 \\ -\sin(\gamma) & \cos(\gamma) & 0 \\ 0 & 0 & 1 \end{bmatrix}$$

$$M = (C * A) * B$$

```
Scale = W / (2 x tan(F / 2))
For all i = 0 to 2
M[0][i] = M[0][i] / Scale
M[1][i] = M[1][i] / Scale
End for
```
(3)
```
#define NORM(a,b) = sqrt(axa+bxb)
```

The following substitutions simplify the mathematics for the transform and generating object images with perspective correction.

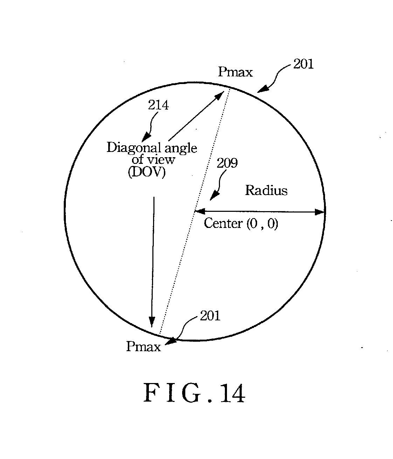

```
For each (i = 1 to H)
    u = -M[1][0] * i * (H / 2) + M[2][0];
  v = -M[1][1] * i * (H /2) + M[2][1];
z = -M[1][2] * i * (H / 2) + M[2][2];
    For each (j = 1 to W)
       s = -M[0][0] * j * ((W - 1) / 2) + u;
       t = -M[0][2] * j * ((W - 1) / 2) + z;
   /* Get mapped point from Cylindrical Coordinate */
       /* Longitude in Cylindrical Coordinate (referring to FIG.
11, FIG. 13 and FIG. 1)*/
   θ=atan2(s,t);
          /* Latitude in Cylindrical Coordinate (referring to FIG. 11,
FIG. 13 and FIG. 1) */
   Ω = -atan2(v, NORM(s, t));
   /* Convert Cylindrical coordinate to Circular coordinate
(referring to FIG. 14) */
   X = Ω * cos(θ);
   Y = Ω * sin(θ);
       End for
   End for
```
(4)

There is a constraint to ensure that the project area is bounded in image source circular region. The following equation can fit the requirement.

$$(360 / \Pi) * atan((H / W) * tan(F / 2)) >= (Pmax - Pmin).$$

$$(5)$$

Fro example, an image system generates 3 object images, and the 3 object images cover 360-degree entire view, then FOV should greater than 120 degrees.

Then F (FOV in radian) should be greater than 2* $\Pi$/3 (120-degree). Then it is easily to control Pmin to fit the requirement from equation (5).

If Pmin is a fixed negative value in application specified, then there is a FOVmax where is:

$$(360 / \Pi) * atan((H / W) * tan(((FOV_{max} / 2) \times \Pi) / 180)) = (P_{max} - P_{min}).$$

$$(6)$$

The maximum value of FOVmax is derived from equation (6).
And in this case

$$Tilt = (P_{max} - P_{min}) / 2$$

$$(7)$$

Equation (8) shows the determination of what Pmin is exists on specified FOV.
The equation (8) controls perspective corrected object video image with remapping point locate in the source video image circular region, and the FOV is maximized.

```
If (Tilt > Pmax)
Tilt = Pmax;
If (Tilt < 0)
Tilt = 0;
while ((360 / Π) * atan((H / W) * tan(((FOV / 2) X Π) / 180))
> (Pmax - Pmin))
{
FOV = FOV - 1; //Over ranged then decrease FOV
};
Tilt = (Pmax - Pmin) / 2
(8)
```

The PTZ controller 118 stores all object images control values in the flash memory inverter 122, and writes new control values of each object images to the memory controller 105 as digital signals. And the lens property controller 117 is to read/write the pantoscopic lens circular image's center position, the radius and the lens DOV (Degree of view) from the flash memory inverter 122, as shown in FIG. 12.
Although this invention has been disclosed and illustrated with reference to particular embodiments, the principles involved are susceptible for use in numerous other embodiments that will be apparent to persons skilled in the art. This invention is, therefore, to be limited only as indicated by the scope of the appended claims.

**Claims**

1. An entire-view video image process method comprising the steps of:

(1) start;
(2) inputting and processing the information for transforming a pantoscopic image based on hemisphere coordinate to another pantoscopic image based on cylindrical coordinate, and generating a cylindrical projection image;
(3) inputting and confirming the information applied to generate a plurality of perspective object images based on cylindrical coordinate, and then generating the plurality of perspective object images;
(4) merging the cylindrical projection image and the plurality of perspective object images to become an output video image, and determining the output video image; and
(5) end.

2. The entire-view video image process method according to claim 1, wherein the step (2) further comprises the steps of:

(21) inputting the information for transforming a pantoscopic image based on hemisphere coordinate to another pantoscopic image based on cylindrical coordinate through an image generating unit, an input processor, and a lens property controller;
(22) building up the pantoscopic image based on cylindrical coordinate; and
(23) generating a cylindrical projection image.

3. The entire-view video image process method according to claim 2, wherein the information of the step (21) comprises a plurality of lens properties having the source image radius, the field of view (FOV), and the circular center.

4. The entire-view video image process method according to claim 2, wherein the image generating unit of the step (21) has a pantoscopic lens, an image sensor, and an A/D converter.

5. The entire-view video image process method according to claim 1, wherein the step (3) further comprises the steps of:

(31) inputting the information for generating the plurality of perspective object images based on cylindrical coordinate through a pantoscopic image processor and an information controller;
(32) confirming the information through a memory controller, the pantoscopic image processor, and the information controller, if yes, going to the next step, if no, going back to the previous step; and
(33) generating the plurality of corrected perspective object images.

6. The entire-view video image process method according to claim 5, wherein the information of the step (31) comprises the pantoscopic value, the tilt value, and the zoom value.

7. The entire-view video image process method according to claim 5, wherein the information controller of the step (31) is a PTZ controller.

8. The entire-view video image process method according to claim 1, wherein the plurality of perspective object images of the step (4) are at least three images.

9. The entire-view video image process method according to claim 1, wherein the step (4) further comprises the steps of:

(41) merging the cylindrical projection image and the plurality of perspective object images to become the output video image;
(42) inputting the output video image to a memory controller;
(43) determining the output video image whether it needs correction or not, if yes, going back to the step (2), if no, going to the next step; and
(44) inputting the output video image to a D/A converter for an analog video output signal and a control unit for a digital video output signal.

10. An entire-view video image process system comprising:

an image generating unit receiving input analog image signals and outputting the image signals after conversion;
a signal process unit receiving, processing the image signals from the image generating unit, and then storing the processed image signals to an image memory with a SDRAM for remapping, continuously NTSC/PAL analog video image signals after conversion being output by the signal process unit ; and
a control unit controlling the signal process unit and outputting digital video image signal.

11. The entire-view video image process system according to claim 10, wherein the image generating unit further comprises a pantoscopic lens, an image sensor, and an A/D converter.

12. The entire-view video image process system according to claim 11, wherein the pantoscopic lens is a fisheye lens.

13. The entire-view video image process system according to claim 11, wherein the pantoscopic lens is a pantoscopic lens.

14. The entire-view video image process system according to claim 11, wherein the pantoscopic lens 101 is defined as an apparatus for projecting a lens image to the image sensor at a full circular region and a diagonal angle of view (DOV) greater than 120 degrees.

15. The entire-view video image process system according to claim 11, wherein the A/D converter is to convert input analog image signals to digital image signals and output the image data of the digital image signals.

16. The entire-view video image process system according to claim 10, wherein the signal process unit is a sole LSI (large scale integrated circuit) and comprises:

an input processor for accepting and processing the image data from the image generating unit;
a memory controller for reading and writing the image data into an image memory;
a NTSC (National Television Standards Committee)/PAL (phase alternation by line) encoder serving to output the image data of the digital image signal;
a D/A converter for analogizing the image data of the digital image signal and outputting analog video image signals with the system of NTSC or PAL;
a memory interface as an interface for the image memory;
a host interface;
a video compress interface;
a resolution conversion generating specified resolution image data; and
a pantoscopic image processor for remapping pantoscopic images from the image generating unit to entire scene;

wherein the pantoscopic image processor uses a pantoscopic image circular region to produce 2 X 2 quadripartite object images as output video images, the host interface, which is an interface for having data transmission/reception of a CPU, and a video compress interface, wherein the memory controller also routes the image data via the video compress interface compressing the video image, and it derives that the image data expanded by the video compress interface 124 are written to the image memory.

17. The entire-view video image process system according to claim 10, wherein the control unit comprises:

a CPU (central process unit) with a control program for controlling the respective circuits of the signal process unit;
a DRAM (Dynamic Random Access Memory);
a ROM (read-only memory);
a flash memory interface as the interface of a lens property controller; and
a PTZ controller;

wherein the lens property controller sets the parameters including the radius, the center of a pantoscopic lens, the circular region, and the diagonal angle of view (DOV) of a pantoscopic image processor, the PTZ controller sets parameters including the pan angle, the tilt angle and the angle of the FOV (Field of view) of the pantoscopic image processor.

the southern hemispere, can be
consider as wide angle lens
generated circular image based
on hemisphere coordinate to
another pantoscopic image

360X180 Cylindrical image,
Simulate whole space.

Wide Angle image map
Southern hemisphere in to
Cylindrical coordinate

With 3 object images not only create
perspective corrected views , All
object image view also cover entire
360 degree view without blind spot

# F I G . 1

# FIG. 2

EP 1 892 665 A2

FIG.3

Pantoscopic image

201

210

201

Tilt Angle
-90~Pmax

Pan 0~360

214

View Position

300 Longitude

Pmax=-90+DOV/2

201

213

214

301 Latitude

-90 Degree

Latitude

FIG.4

Panoramic Lens

10 Degree

Monitoring Area

An Example shows monitoring Area using a 160 degree Panoramic Lens

Panoramic Lens

15 Degree

Monitoring Area

An Example shows monitoring Area using a 210 degree Panoramic Lens

FIG. 5

**FIG.6**

**FIG.7**

1

start

2

inputting the information for transforming a pantoscopic image based on hemisphere coordinate to another pantoscopic image based on cylindrical coordinate through an image generating unit 109, an input processor 113, and a lens property controller 117

3

building up the pantoscopic image based on cylindrical coordinate

4

generating a cylindrical projection image

5

inputting the information for generating a plurality of perspective object images based on cylindrical coordinate through a pantoscopic image processor 106 and a PTZ controller 118

6

confirming the information of the pantoscopic value, the tilt value, and the zoom value through a memory controller 105, the pantoscopic image processor 106, and the PTZ controller 118

Yes

No

7

generating the plurality of corrected perspective object images

A

FIG.8

A

┌─────────────────────────────────────────────────────────┐ ⌐ 8
│     merging the cylindrical projection image and the plurality of  │
│     perspective object images to become an output video image      │
└─────────────────────────────────────────────────────────┘

┌─────────────────────────────────────────────────────────┐ ⌐ 9
│     inputting the output video image to a memory controller 105     │
└─────────────────────────────────────────────────────────┘

2 ↑

        No    ⟨ determining the output video image whether ⟩ ⌐ 10
                   it needs correction or not

                           Yes

┌─────────────────────────────────────────────────────────┐ ⌐ 11
│   inputting the output video image to a D/A converter 107 for an    │
│   analog video output signal and a control unit 123 for a digital   │
│             video output signal respectively                        │
└─────────────────────────────────────────────────────────┘

                        ⌐ 12
                    ┌─────────┐
                    │   end   │
                    └─────────┘

# F I G . 8 (Continued)

FOV >= 120          FOV >= 120          FOV >= 120

F I G. 9

F I G. 10A

F I G. 10B

-π / 2(0,R)

π
(-R,0)

(R,0)

0

π / 2 (0,-R)

(-2R,0)          (0,0)          (2R,0)

(-2R,-R)          (0,-R)          (2R,-R)

```
For(i = -2R<2R; i = i+1)
    For(j = 0; j > -R; j = j-1)
        Θ        = i* π  / 2R
        x         = -j* cos(Θ)
        y         = -j* sin(Θ)
    End for
End for
```

# FIG. 11

300

Wide Angle
Source Image

105

Memory
Controller

Circle Radius
Center Position

Lens DOV

117

Lens Property
Controller

PAN, TILT, FOV
Num Object Images

118

PTZ
Controller

Auto Cruise

Motion Tracker

Applications...

# F I G . 12

300

Longitude

(-180 , 90)        (0 , 90)        (180 , 90)

301

Latitude

(-180 , 0)

Radius

(0 , 0)

Radius

(180 , 0)

Radius

(-180 , -90)        (0 , -90)        (180 , -90)

Radius        Radius        Radius        Radius

# F I G . 13

F I G . 14